(19) Europäisches Patentamt / European Patent Office / Office européen des brevets

(11) **EP 4 372 548 A1**

(12) **EUROPEAN PATENT APPLICATION**

(43) Date of publication:
**22.05.2024 Bulletin 2024/21**

(21) Application number: **22306680.4**

(22) Date of filing: **15.11.2022**

(51) International Patent Classification (IPC):
**G06F 7/72** (2006.01)   **H04L 9/00** (2022.01)

(52) Cooperative Patent Classification (CPC):
**G06F 7/723; H04L 9/003;** G06F 2207/7219;
G06F 2207/7223; G06F 2207/7242;
G06F 2207/728; G06F 2207/729

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **THALES DIS FRANCE SAS
92190 Meudon (FR)**

(72) Inventors:
- **TEGLIA, Yannick
  92190 Meudon (FR)**
- **VIGILANT, David
  92190 Meudon (FR)**
- **ROUSSELLET, Mylène
  92190 Meudon (FR)**

(74) Representative: **Bricks, Amélie
  Thales Dis France SAS
  Intellectual Property Department
  6, rue de la Verrerie
  92190 Meudon (FR)**

(54) **PROTECTING CRYPTOGRAPHIC OPERATIONS AGAINT HORIZONTAL SIDE-CHANNEL ANALYSIS ATTACKS**

(57)    Enhancement of security of a computerized digital security device against horizontal side-channel analysis attacks randomizes sequences of actual operations and dummy operations. Depending on a value of a random value, the performing a first sequence in which a dummy operation precedes an actual operation or a second sequence in which a dummy operation follows an actual operation thereby obfuscating a value of a secret being manipulated by the computerized digital security device.

Fig. 8

**Description**

**BACKGROUND OF THE INVENTION**

The present invention relates, generally, to digital security devices, and, more particularly, to countermeasures protecting digital security devices against side-channel attacks, especially, horizontal side-channel attacks (horizontal attacks).

Electronic communication and commerce can be powerful, yet dangerous tools. With the wide-spread availability of network technology, such as the Internet, there is an ever-increasing use of online tools for communication and commerce. Every year more users find it easier or quicker to conduct important transactions, whether in the form of correspondence or commerce, using computers and computer networks.

Furthermore, digital technology is playing an ever-increasing role in identity management, e.g., digital identity cards and passports.

Such digital security technologies may involve any of a large variety of software and hardware techniques, for example, cryptography, anti-virus software, and biometrics. These digital security technologies may be deployed on many types of *digital security devices,* e.g., smart cards, USB tokens with embedded smart cards, subscriber identity modules (SIM) embedded or installed in mobile devices, Internet of Things (IoT) devices. Indeed, any computerized device entrusted to protect secrets, e.g., private communications, cryptography keys, account numbers, health information, may be viewed as a digital security device.

However, there is always the risk that the security of operations performed by digital security devices are compromised through interception by third parties who do not have the right to partake in the transactions. When malicious third parties obtain access to otherwise private transactions and data there is risk of economic loss, privacy loss, and even loss of physical safety.

Consider, as an example, cryptography, which is one mechanism employed to avoid intrusion into the privacy of electronic transactions and data. Traditionally, both sender and recipient of a cryptographic message were considered secure. Cryptography's primary use was to transmit an encoded message from the sender to the recipient without fear that an intermediary would be able to decode the message. If an attacker has no access to the sender's or recipient's cryptographic devices, the attacker is limited to using the encoded message itself or possibly an encoded message and a corresponding plaintext message, to discern the cryptographic key used to encode or decode the message. However, if the attacker has access to the cryptographic device, the picture changes dramatically as the attacker can in that case also analyze artifacts, so called side-channel data, such as power consumption, to deduce data manipulated by the cryptographic device.

One mechanism of ensuring that a private key is indeed kept private is to store the private key and any related key material on a secure portable device, e.g., a smart card or a mobile device. A smart card is a small tamper resistant computer often in the form of a credit card sized and shaped package. Smart cards may be used to store cryptographic keys and cryptography engines for performing encryption, decryption, and digital signatures.

In one example, a user may receive an encrypted message and uses his smart card to decrypt the message by first authenticating to the smart card and then passing the message to the smart card for decryption. If authentication is successful, the smart card may use a cryptographic key stored on the card, and a corresponding cryptography engine, to decrypt the message and provide the decrypted message to the user. Similarly, if a user wishes to cryptographically sign a message, the user may pass the message to the user's smart card, which uses a cryptographic key of the user to digitally sign the message and to provide the signature back to the user or to a third-party recipient.

While cryptography mechanisms are extremely difficult, if not impossible, to break from an algorithmic perspective, the implementation of cryptography mechanisms on the electronics of digital security devices may render them much less secure than an algorithmic analysis would suggest. If an attacker has access to the smart card, the attacker may make repeated observations of, for example, power consumption or electromagnetic emission, during the execution of the cryptographic algorithms and use such ancillary information in attempts to discern the secrets stored on the smart card, specifically secret cryptographic keys stored on the smart card. One such attack is the so-called side-channel attack.

Side-channel attacks make use of the program timing, power consumption and/or the electronic emanation of a device that performs a cryptographic computation. The behavior of the device (timing, power consumption and electronic emanation) varies and depends directly on the program and on the data manipulated in the cryptographic algorithm. An attacker could take advantage of these variations to infer sensitive data leading to the recovery of a private key.

In parallel to the development of side-channel analysis attacks, techniques have been developed to protect against attempts to recover keys, or other sensitive information, from side-channel leakages. These techniques, known as *countermeasures,* include attempts to hide the operations of the cryptography device from any side-channel data leakage, for example, by masking the data while being manipulated by cryptographic algorithms, by introducing dummy instructions, altering order of instructions, or manipulating the system clock to introduce jitters in any collected side-channel data.

There are several different types of side-channel attacks and, conversely, several different types of countermeasures. With respect to side-channel attacks based on electrical activity of a device, Mark Randolph and William Diehl, Power Side-Channel Attack Analysis: A Review of 20 Years of Study for the Layman, Cryptography 2020, 4, 15; doi:10.3390/cryptography4020015 (incorporated herein by reference) provides a survey of many of the techniques employed as well as discussion of countermeasures.

One form of attack is based on analysis of execution paths through a security algorithm, e.g., a cryptography algorithm. In essence, an attacker monitors, for example, power consumption or execution time through one path with respect to power consumption or execution time of another path of a sensitive routine to determine which path is being executed in response to a particular input data.

One countermeasure defense against side-channel and fault-injection attacks is to desynchronize the execution of the respective paths through the routine such that any given pass through a portion of code may not result in the same power consumption or timing signature. Such desynchronization may be performed by introducing *dummy* routines that intentionally slow-down a portion of code and thereby desynchronizing sensitive routine execution timings to prevent an attacker from performing fault-injection attacks at a precise time or location. Introducing dummy routines may also cause an unpredictable power usage profile for the execution of a portion of code thereby making side-channel analysis attacks more difficult.

In another countermeasure, *masking,* secret data is never directly manipulated and is therefore not prone to being revealed through side-channel attacks. The secret data, e.g., a cryptographic key to be used in a modular exponentiation, is masked by dividing it up into at least two components, a mask and a masked variable corresponding to the secret data. Calculations are performed on these components and results are backed out from the results obtained using the masked version of the secret data.

Many side-channel attacks, including simple power analysis (SPA), differential power analysis (DPA), and correlation power analysis (CPA) (described in Eric Brier, Christophe Clavier, Francis Olivier: Correlation Power Analysis with a Leakage Model. CHES 2004: 16-29), make many calls on a cryptographic primitive in order to build a large data set of power curves that may be analyzed. Such attack schemes are referred to herein collectively as *vertical attacks.*

In contrast to *vertical attacks,* C.D. Walter (C. D. Walter. Sliding Windows Succumbs to Big Mac Attack. In Ç. K. Koç, D. Naccache, and C. Paar, editors, Cryptographic Hardware and Embedded Systems - CHES 2001, volume 2162 of Lecture Notes in Computer Science, pages 286-299. Springer, 2001), Witteman et al. (Marc F. Witteman, Jasper G. J. van Woudenberg, and Federico Menarini. Defeating RSA Multiply-Always and Message Blinding Countermeasures. In CT-RSA, pages 77-88, 2011), Clavier et al. (Christophe Clavier, Benoit Feix, Georges Gagnerot, Mylene Roussellet, and Vincent Verneuil. Horizontal Correlation Analysis on Exponentiation. In ICICS, pages 46-61, 2010), and Bauer et al. (Aurelie Bauer, Eliane Jaulmes, Emmanuel Prouff, and Justine Wild. Horizontal and Vertical Side-Channel Attacks against Secure RSA Implementations. In Ed Dawson, editor, Topics in Cryptology- CT-RSA 2013 - The Cryptographers' Track at the RSA Conference 2013, San Francisco, CA, USA, February 25-March 1, 2013. Proceedings, volume 7779 of Lecture Notes in Computer Science, pages 1-17. Springer, 2013) describe attacks, that are, for example, pertinent to RSA and ECC (elliptic curve cryptography), that only require a single trace resulting from a single call to a cryptographic primitive. These forms of attacks are referred to as *horizontal attacks.*

Whereas the above-discussed countermeasures, e.g., timing and masking countermeasures, are generally effective against vertical attacks, they are less effective against horizontal attacks.

One core calculation in many cryptographic systems is modular exponentiation, e.g.:

$$T = M^d mod\ N \hspace{4cm} (1)$$

Where,

M is a message to sign or decrypt
d is a cryptographic secret, e.g., a key or portion of a key that is to be protected.

One common technique for performing a modular exponentiation is the so-called square-and-multiply algorithm, illustrated in Table 1:

```
d={0,1}ⁿ

T=1

For i from n-1 to 0

        T=T² mod N

        if(d[i]==1)

                T=T*M mod N

        endif

endfor

return T
```

## Table 1.  Square and Multiply Algorithm

First a note of notation. d={0,1}$^n$ signifies that $d$, the secret to be protected, is an *n-bit* binary number indexed from 0 to n-1 with n-1 being the most significant bit.

For each bit, a squaring operation is performed and for each bit with the value 1, a multiplication operation is also performed. In discussing this algorithm and those that follow, "S" will be used to refer to a squaring and "M", to a multiplication.

If an attacker is able to detect when a squaring is performed and when a multiplication is performed, the attacker can determine the chaining of operations and from that deduce the exponent $d$, which should be protected as a secret.

Consider, for example, an exponentiation with the value $d=51_{10}=110011_2$. That operation, using square-and-multiply, would produce an execution trace SMSMSSSMSM, which an attacker may group as SM SM SS SM SM. The attacker can assign SM to "1" and SS to "00". Thus, an attacker can deduce that the produced execution trace is results from the modular exponentiation with $d=110011$. Note that the base, i.e., $M$, of the exponentiation does not impact the trace. Thus, with the ability to distinguish squaring (S) from multiplication (M), an attacker can determine the secret $d$.

The square-and-multiply always algorithm, illustrated in Table 2, is a more effective mechanism to protect the secret $d$ because regardless of the value of a bit $d_i$, a multiplication operation is performed.

```
d={0,1}ⁿ

T=1

For i from n-1 to 0

        T=T² mod N

        if(d[i]==1)

                T=T*M mod N

        else

                T'=T*M mod N

        endif

    endfor

    return T
```

## Table 2.  Square and Multiply Always Algorithm

In the case of the square-and-multiply algorithm, the multiplication operation is only performed in the case of a d[i]value of 1. As discussed above, that fact may be exploited by an attacker if it is possible to distinguish between multiplications and squarings. To avoid that, in the square-and-multiply-always algorithm, a dummy operation (T'=T*M mod N) that is performed when the value of d[i]is 0. The term *dummy operation* is used herein to refer to an operation introduced into an algorithm without taking part in the production of the result of the algorithm. In the square-and-multiply-always algorithm, the result *T'* is never used. Therefore, the operation T'=T*M mod N is a dummy operation. Similarly, *T'* is a *dummy value* or *dummy variable*.

When executing the square-and-multiply-always algorithm with $d=51_{10}=110011_2$, the execution trace is SM SM SM SM SM SM, which of course avoids the divulgation of 1-value bits from 0-value bits in *d*.

However, Witteman, *supra,* has demonstrated that it is possible to distinguish the two multiplications, i.e., the actual multiplication and the dummy multiplication. Designating the dummy multiplication as M' the trace becomes SM SM SM' SM' SM SM, thus, divulging to the attacker, who can distinguish between square (S), actual multiplication (M), and dummy multiplication (M'), the value of *d*.

Furthermore, the square-and-multiply-always algorithm is prone to safe-error attacks (Marc Joye and Sung-Ming Yen. The montgomery powering ladder. In Burton S. Kaliski Jr., Çetin Kaya Koç, and Christof Paar, editors, Cryptographic Hardware and Embedded Systems - CHES 2002, 4th International Workshop, Redwood Shores, CA, USA, August 13-15, 2002, Revised Papers, volume 2523 of Lecture Notes in Computer Science, pages 291-302. Springer, 2002.).

The Montgomery Ladder, illustrated in Table 3, is another popular algorithm for performing modular exponentiation.

d={0,1}n

R0=1

R1=1

For i from n-1 to 0

    if(d[i]==1)

        R0= R0*R1 mod N

        R1= R1²

    else

        R1= R1*R0 mod N

        R0= R0²

    endif

endfor

return R0

Table 3. The Montgomery Ladder

When the Montgomery Ladder is executed on $d=51_{10}=110011_2$, the execution trace is MS MS MS MS MS MS; thus, not directly revealing the value of d to an attacker who can distinguish S from M. However, as the two squaring operations and two multiplication operations, respectively, are different in that different registers, having different physical locations, are involved and, thus, producing different power traces. In a countermeasure against a C safe-error attack (See, Joye, *supra*), the role of the registers R0 and R1 is switched between the two paths. Yet, being able to distinguish the two squarings as S and S', respectively, and the two multiplications as M and M', respectively, the power trace, depending on the attacker's capabilities, may be MS M'S M'S MS MS or, even worse, MS M'S' M'S' MS MS, and, as above, revealing *d* to the attacker.

In some countermeasures, the exponent *d* is blinded with a random quantity, e.g., d'=d+k*phi(N) where *k* is a random number changing at each exponentiation and *phi()* is Euler's totient function. This countermeasure is effective against vertical attacks, such as correlation power attacks (CPA). However, it is helpless against horizontal attacks as the random variable *k* remains constant through the entire exponentiation operation, which allows for recovery of *d'*, which is also valuable to an attacker as *d'* is a valid exponent and, therefore, may be used to forge signatures.

As can be seen from the above discussion, horizontal attacks are possible because the order of operations is linked the value of the exponent. Therefore, identifying the operations reveals the exponent, whether it is masked or not.

From the foregoing it is apparent that there is a need for an improved method to protect sensitive routines executed by digital security devices against horizontal side-channel attacks.

## SUMMARY

In a described example, a method for enhancing security of a computerized digital security device against horizontal side-channel analysis attacks randomizes sequences of actual operations and dummy operations. Depending on a value of a random value, the method performs a first sequence in which a dummy operation precedes an actual operation or a second sequence in which a dummy operation follows an actual operation thereby obfuscating a value of a secret being manipulated by the computerized digital security device.

Security of a computerized digital security device against horizontal side-channel analysis attacks is enhanced by in executing, on a processor of the computerized digital security device, a cryptographic algorithm involving a sequence of a first operation (S, M) and a second operation (M, M'), the sequence depending on coefficients of a protected secret (d) protected by the digital security device, based on a random value (coin), performing a first sequence containing an actual intermediate-value calculation (S,M) of an intermediate value (T0,A0,B0) followed by a dummy intermediate-value calculation (S',M',M) of a dummy value (T1,A1,B1) or a second sequence containing by the dummy intermediate-value calculation of the dummy value (T1,A1,B1) followed the true intermediate-value calculation of the intermediate value (T0,A0,B0) whereby an execution sequence of true intermediate-value calculations and dummy intermediate-value calculations is randomized by the random value (coin).

Further, receiving, by the processor of the computerized digital security device receives a quantity (X), executing the cryptographic algorithm on the received quantity (X) and the protected secret (d), wherein the sequence of executions of first operation (S) and second operation (M) are performed by the cryptographic algorithm as a mechanism for evaluating a cryptographic function on the received quantity (X) and the protected secret (d), having n coefficients (di), to determine a result (T). Further, iteratively executing a loop that for each iteration of the loop, indexed by a loop index (i), over the coefficients (di) of the protected secret (d), in which at least one of the first (S) or second (M) operation is performed, with a body of the loop on a coefficient of the protected secret indexed by the loop index, the body of the loop including determining the random value (coin); depending on the coefficient indexed by the loop index, executing a code segment corresponding to the first operation (S) or the second operation (M) wherein for a first value of the random value (coin): executing the first code section (S,M) including the sequence of intermediate-value calculations containing the true intermediate-value calculation (S, M) producing a true intermediate-value (T0) followed by a dummy intermediate-value calculation (S',M') producing a dummy intermediate-value (T1); and wherein for a second value of the random value (coin): executing the second code section (S,M) including a sequence of operations containing the dummy intermediate-value calculation (S',M') producing the dummy intermediate value (T1) followed by the true intermediate-value calculation (S,M) producing the true intermediate value (T0); saving the true intermediate-value (T0) into a loop iteration result (T) for the next iteration of the loop; and upon completing the iteration of the loop, returning the loop iteration result as a final result for the cryptographic function.

In an aspect, executing both the code segment corresponding to the first operation (S) and the second operation (M).

In a further aspect, the random value is re-determined before performing the second operation.

In another aspect, the cryptographic algorithm is a square-and-multiply-always algorithm for exponentiation (X^d) of a base by an exponent, wherein the base is a received quantity (X) and the exponent is the protected secret (d).

In yet another aspect, the cryptographic algorithm is a Montgomery ladder algorithm for exponentiation (X^d) of a base by an exponent, wherein the base is a received quantity (X) and the exponent is the protected secret (d).

In another aspect, the cryptographic algorithm performs a scalar product of an elliptic curve cryptography system.

In an alternative, the cryptographic algorithm performs a modular exponentiation of an RSA cryptography system.

The digital security device may be a smart card.

The sequences of a first operation and second operation may correspond to processing one coefficient of the protected secret.

In an alternative, the sequences of a first operation and second operation correspond to processing a window of coefficients comprising a plurality of coefficients of the protected secret.

In an aspect, the method for enhancing security of a computerized digital security device against horizontal side-channel analysis attacks randomizes sequences of actual operations and dummy operations may be implemented on a digital security device having a processor and a memory in including instructions executable by the processor for performing the method for enhancing security of a computerized digital security device against horizontal side-channel analysis attacks randomizes sequences of actual operations and dummy operations.

In another aspect, the method for enhancing security of a computerized digital security device against horizontal side-channel analysis attacks randomizes sequences of actual operations and dummy operations may be implemented in a non-transitory memory comprising instruction executable on a digital security device having a processor and a memory, the instructions executable by the processor for performing the method for enhancing security of a computerized digital security device against horizontal side-channel analysis attacks randomizes sequences of actual operations and dummy operations.

**BRIEF DESCRIPTION OF THE DRAWINGS**

FIG. 1 is an illustration of a network in which users operate digital security devices to perform any of a variety of sensitive operations, for example, cryptographic operations.

FIG. 2 is an illustration of equipment that may be used to perform a side-channel analysis attack, for example, a horizontal analysis attack.

FIG. 3 is a high-level block diagram of an example of a digital security device.

FIG. 4 is a flowchart illustrating high-level steps of one prior art cryptographic operation, the square-and-multiply-always technique for performing modular exponentiation.

FIG. 5 is a flowchart illustrating modification according to the invention to a cryptographic function to include dummy instructions that are executed in a randomized sequence with respect to actual instructions, i.e., instructions that are executed to produce a result from the cryptographic function.

FIGs. 6 through 8 illustrate the transformation of an algorithm, illustrated in FIG. 6, corresponding to the flowchart of FIG. 5, into an algorithm with randomized sequences of dummy and actual instructions, illustrated in FIG. 8, using the mechanism of FIG. 5, which is replicated as an outline in FIG. 7.

**DETAILED DESCRIPTION OF THE INVENTION**

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. Therefore, the following detailed description is not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The following description includes references to various methods executed by a processor, for example, located on an integrated circuit chip. As is common in the field, there may be phrases herein that indicate these methods or method steps are performed by software instructions or software modules. As a person skilled in the art knows, such descriptions should be taken to mean that a processor actually executes the methods, software instructions, and software modules.

A note on terminology to differentiate between different concepts used in the description herein. A cryptographic *primitive* is a low-level cryptographic mechanism used to build cryptographic protocols for computer security systems. Examples include, but is not limited to, digital signature and decryption of encrypted messages. A cryptographic primitive is built using mathematical *functions,* for example, modular exponentiation, which in turn are constructed from *arithmetic operations,* for example, modular squaring and modular multiplication; unless context indicates otherwise, *operation* refers to *arithmetic operation.* Specific techniques for computing *functions* are referred to herein as *algorithms*; for example, modular exponentiation may be performed using the square-and-multiply, square-and-multiply-always, and Montgomery Ladder algorithms.

The herein described technology provides a mechanism to protect digital security devices against side-channel attacks, in particular, against horizontal attacks. According to the herein described technology, the order of operations that may be distinguishable from one another during the performance of a cryptographic primitive or a component of a cryptographic primitive, such as exponentiation, is delinked from the value of the protected asset, e.g., a cryptographic key used during an exponentiation process. The technique improves the security of cryptographic devices by making these devices less vulnerable to horizontal attacks.

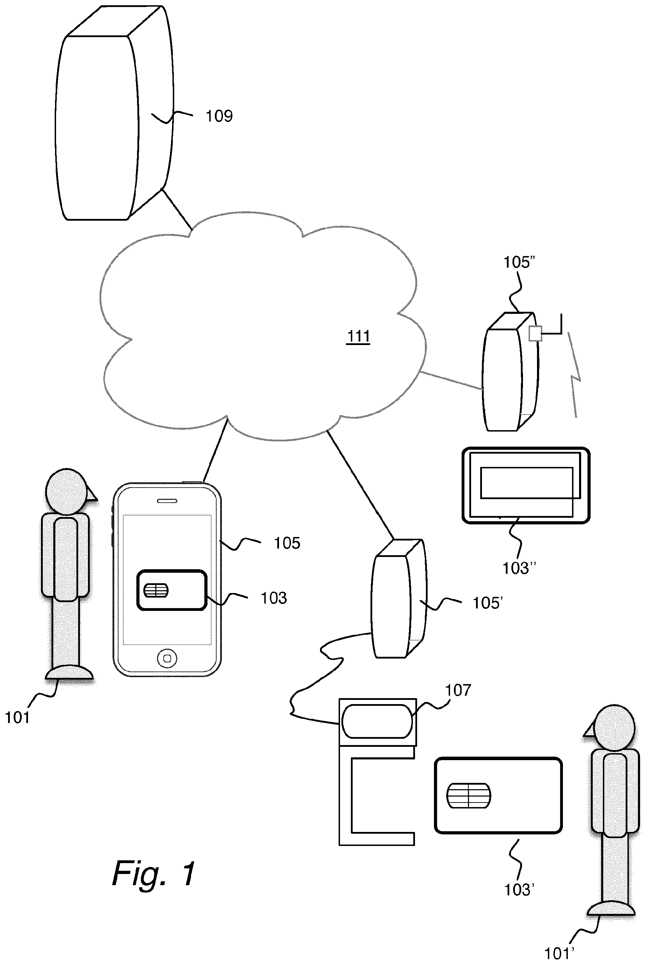

FIG. 1 is an illustration of a network 111 in which users 101 operate digital security devices 103 to perform sensitive tasks, for example, executing cryptographic primitives such as decryption or creating a digital signature. The digital security devices 103 maybe any of various types of tamper resistant devices such as smart cards, electronic identity cards, passports, and secure USB tokens. A digital security device 103 may be installed in a host device 105, such as a mobile communications device. Alternatively, a digital security device 103' maybe connected via a terminal 107 to a host device 105'. In yet another alternative, a digital security device 103" maybe wirelessly connected to a host device 105", for example, via near-field communication (NFC), Bluetooth, or WiFi.

In many cases, the digital security devices 103 are used to perform cryptographic services in conjunction with a service provided by a service provider 109 over a network 111, e.g., the Internet. Such cryptographic services include providing cryptographic signature, encryption, decryption, and authentication. Alternatively, the digital security devices are used for other operations that involve sensitive information, for example, account access via personal identification number (PIN), password or biometrics.

To perform cryptographic services, a digital security device 103 stores some sensitive information thereon, e.g., cryptographic keys, PINs or passwords.

In classical cryptography, a sender and recipient of a secret message are each in possession of keys that may be employed to encrypt the secret message and decrypt the secret message, respectively. The security of the employed cryptographic algorithm relies on confidence that it is mathematically very difficult to decipher the message without the correct key as well as mathematically very difficult to determine the encryption and decryption keys from a message. Thus, if a message is intercepted en route to a recipient, the intercepting party would not be able to infer either the associated plaintext or the keys used to encrypt and decrypt the message.

That security relies on an assumption that the execution of the cryptographic primitive itself will not provide information that may be used to determine the sensitive information used in performing the cryptographic operation, e.g., a decryption operation. If the message is intercepted between a sender and the intended recipient, it is a safe assumption that the intercepting entity would not have access to the device that is being used to decipher the message.

However, as maybe noted by the examples of FIG. 1, digital security devices 103, e.g., cryptographic devices, may be mobile devices or incorporated into mobile devices that are somewhat prone to being lost or stolen and can thus come into possession by a person who may desire to discern the sensitive information stored on the digital security device 103. In such instances, an entity seeking to determine the sensitive information stored on the digital security device 103 may, in fact, be in possession of the digital security device 103 and may therefore be able to observe the digital security device while it is executing sensitive operations, for example, cryptographic operations.

When a digital security device 103 may be observed while performing sensitive operations, it is possible to measure various physical characteristics of the digital security device 103 that change during the performance of the sensitive operation. For example, the power consumption, electromagnetic radiation, timing information, and even noise of the digital security device 103 maybe recorded and analyzed to determine the sensitive information stored on the digital security device 103. Collectively, such physical characteristics are referred to herein as *side-channel data* and use of such data to determine a sensitive information, e.g., a cryptographic key, as *side-channel analysis* or *side-channel attacks.*

In one form of side-channel attack, *horizontal attack,* an attacker can detect which operation is executed or even detect whether an operation is performed with one set of registers rather than another set of registers and may use that information to determine the order of execution of operations, particularly squarings and other multiplications, or either of those with specific registers, and to exploit that knowledge to discern secret information stored on the digital security device 103. Herein, *squaring* and *multiplication* are differentiated from one another even though a *squaring* is a multiplication, specifically, of a quantity with itself, e.g., multiplication of the value stored in one register with itself. Conversely, herein, a *multiplication* is an operation between two different quantities, e.g., the values stored in two distinct registers.

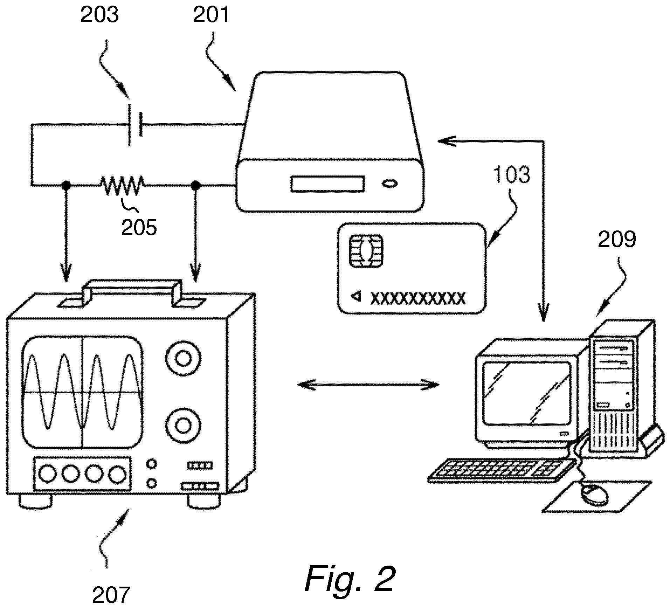

FIG. 2 is an illustration that provides an example of equipment that may be used to perform a side-channel analysis attack, for example, a horizontal attack. A digital security device 103 may be inserted into a reader 201. The reader is either connected to or contains an electronic circuit having, for example, a power source 203 that provides power to the security device and a resistor 205. Power consumption of the digital security device 103 may be monitored on a signal acquisition device 207, for example, an oscilloscope, connected in parallel to the resistor 205. A computer 209 is also connected to the reader 201. The computer 209 may be used to change the sensitive information stored on a device under test, i.e., a device that may be manipulated by the attacker, induce the digital security device 103 to perform sensitive operations, e.g., decryption, digital signature, or authentication. The signal acquisition device 207 may also be connected to the computer 209 so that digitized power traces produced by the signal acquisition device 207 may be transferred to the computer 209 for analysis.

The setup of FIG. 2 may also be used to perform a horizontal attack against a digital security device 103. In such a case, power consumption may be observed on a power trace in a manner that distinguishes the various operations performed by the digital security device 103 and, thus, discerning the chaining of operations in a particular execution flow.

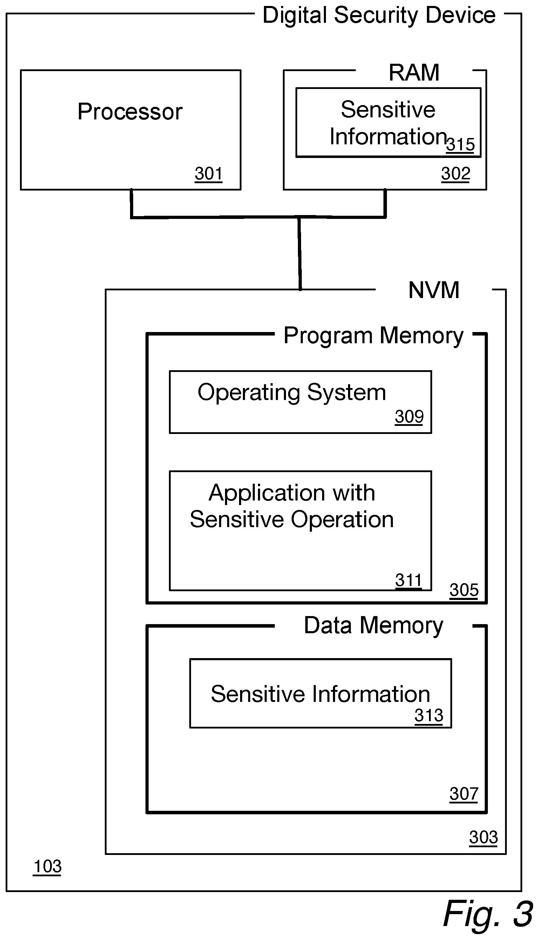

FIG. 3 is a high-level diagram of an example of a digital security device 103, which contains a processor 301, a random access memory (RAM) 302, and a non-volatile memory (NVM) 303, e.g., a non-volatile random-access memory (NVRAM). The NVM 303 may be used to store programs in a program memory 305 and data in a data memory 307. The programs stored in the program memory 305 provide instructions that are executable by the processor 301. The programs may include an operating system 309, e.g., a virtual machine. The programs may also include an application 311 that executes at least one sensitive operation, e.g., a cryptographic primitive. The data memory 307 contains sensitive information 313, e.g., cryptographic keys, passwords, and personal identification numbers. During execution of programs, sensitive information 315 may also be stored in the RAM 302.

The application 311 may execute a cryptographic primitive that performs an operation particularly vulnerable to horizontal attacks. According to an embodiment of the invention, such a cryptographic primitive is implemented, as described hereinbelow, in a manner that delinks the chaining order of possibly detectable operations from secret information that is protected by the digital security device 103.

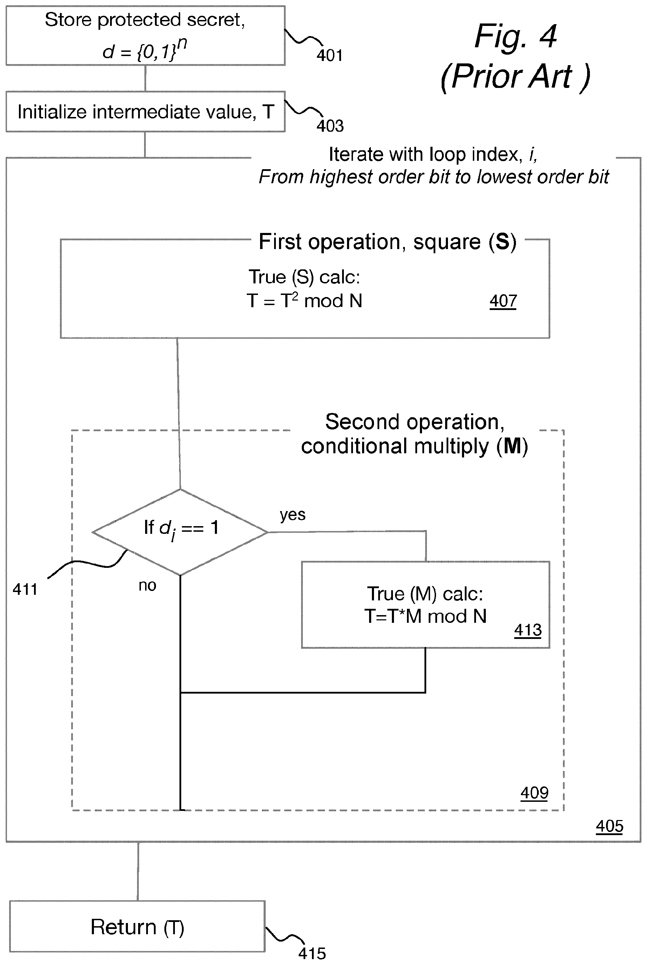

FIG. 4 is a flow-chart illustrating high-level steps of a square-and-multiply modular exponentiation. The flow-chart is essentially the same as the algorithm of Table 2 (above) and repeated in FIG. 4 to provide background for modifications made to secure it against horizontal attacks. Fig. 4 is the unmodified version. As a first step, a protected secret d is stored on the digital security device, step 401.

An intermediate value, $T$, is initialized, step 403. In different implementations of the square-and-multiply algorithm, $T$ may be initialized to 1 or to $M$, the value of the quantity being exponentiated, e.g., a message to decrypt or to digitally sign. In practice, it is common to start the exponentiation with the most significant bit having the value 1 as the leading 0 bits do not affect the result as squarings and multiplications thereof yield intermediate value of 0. Therefore, the first '1' encountered is the first squared, i.e., $T$=1, and multiplied by $M$, i.e., $T$=$M$. Therefore, that step can be skipped using the knowledge that the first round of the most significant 1 yields the result $T$=$M$. $T$ can therefore be initialized to $M$ and $i$, the loop index, set to $n$-2, where $n$-1 is the location of the most significant non-zero bit of d.

An iteration 405 over the bits of the exponent $d$ is performed. Typically, the iteration is over all bits, indexed by $i$, from the highest order bit to the lowest order bit. In alternative implementations, by initializing $T$ to $M$, the iteration may start at thehighest order 1-valued bit. During the iteration, the intermediate value $T$ is updated through squaring (S) and multiplication (M) operations.

In the iteration 405, first for all bits $d[i]$, a squaring (S) operation is performed, step 407.

Then, a conditional multiply operation 409 is performed, i.e., for all bits $d[i]$ equal to 1 (decision box 411), a multiplication (M) operation is performed, step 413.

Thus, step 407 is performed for all bits $d[i]$, whereas step 413 is only performed for bits $d[i]$ == 1.

At the conclusion of the iteration 405, the intermediate value $T$, which is updated during the iteration 405, is returned, step 415, with the value of the modular exponentiation.

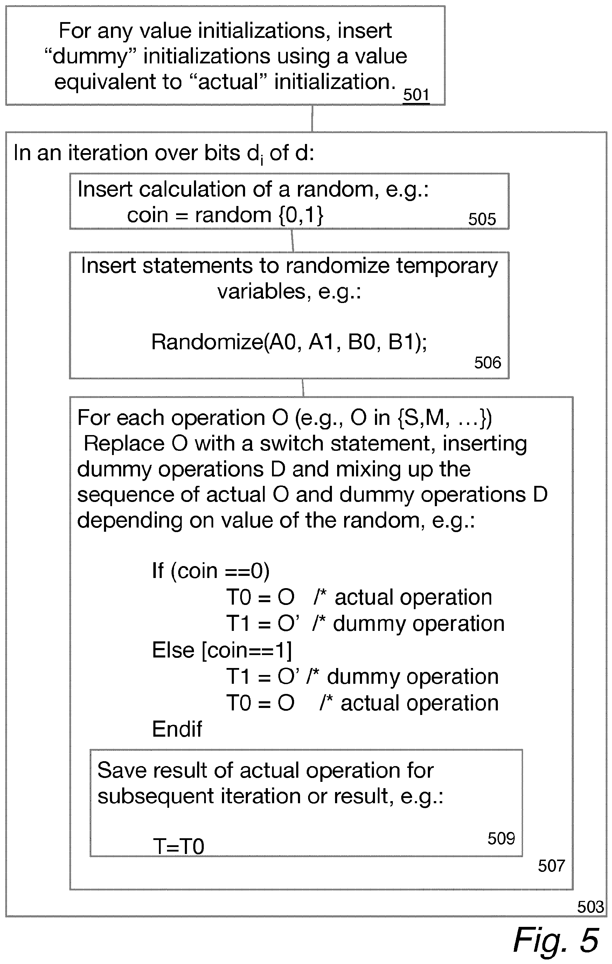

FIG. 5 is a flowchart illustrating modification to a cryptographic function to include dummy operations that are executed in a randomized sequence with respect to actual operations. Herein, an *actual* operation is an operation that in some way contributes to the result of a function. For example, in the examples of algorithms for computing a modular exponentiation, squarings and multiplications are used on an intermediate value that is updated over iteration over the bits of an exponent. Any squaring and multiplication operations that update the intermediate value that will eventually produce the end-result from the function is an *actual* operation. Conversely, a *dummy* operation is an operation that mimics an actual operation without contributing to the end-result.

As noted in Tables 1, 2, and 3 as well as in FIG. 4, intermediate values are initialized. In the modified algorithms according to the invention, dummy intermediate values may also be used so that dummy operations store their results into dummy intermediate values. Accordingly, the modified algorithm includes dummy initializations, step 501. If the actual intermediate value is set to a predictable constant, e.g., as in Tables 1, 2, and 3, to 1 ($T$=1, $R0$=1, $R1$=1, etc.), then the dummy intermediate value would be set to that quantity also. However, as noted, there are variants on the basic algorithms, e.g., square-and-multiply-always, for performing mathematical functions, e.g., modular exponentiation. Some of these variants may initialize a temporary variable to more unpredictable values. For example, the square-and-multiply algorithm can be implemented such that the intermediate value ($T$) is initialized to the message $M$, as illustrated in Table 4. In such cases, the dummy intermediate value ($T1$) is set to a value that is likely indistinguishable from the value $M$, e.g., a random value.

$$d=\{0,1\}^n$$

$$T=M$$

For idx from n-2 to 0

$$T=T^2 \bmod N$$

if(d[i]==1)

$$T=T*M \bmod N$$

endif

endfor

return T

Table 4.  Square-and-Multiply Algorithm with Intermediate Value Set to Message

*M*

In a loop 503 iterating over the bits *d[i]* of the secret *d*, e.g., corresponding to loop 405 of the square-and-multiply algorithm illustrated in FIG. 4, modifications are made to the original algorithm: insertion of calculation of a random, step 505, introduction of dummy operations sequenced with actual operations depending on the value of the random, step 507, and insertion 509 of a statement to save intermediate results from the actual operation for use in subsequent iterations of the loop 503.

Step 505: Insert a calculation of a random value, e.g.:

$$coin = random\ \{0,1\}$$

As noted hereinbelow, the herein-described modifications to non-randomized versions of algorithms include use of several temporary registers. These registers may be used to perform dummy operations and to store results of dummy operations. There may also be, see, for example, the modified Montgomery Ladder algorithm of Table 10 (hereinbelow), registers that temporarily store results of actual operations for later transfer into registers that are used to promulgate intermediate results to subsequent iterations or the final output. In an alternative embodiment, such temporary and dummy registers are randomized, step 506.

Step 507: Each operation that is performed using a bit *d[i]* of the secret value *d* is replaced with a switch statement indexed by the random, *coin*. If, as in the example, the value of the random is binary, the switch statement could be an if-else statement. For each branch of the switch statement, a dummy operation is inserted in sequence with the actual operation with different sequences depending on the value of the random. As discussed hereinbelow, in an alternative embodiment, algorithms operate over sliding windows of multiple bits of *d[i]*. In such algorithms, the *coin* value can take multiple values and the here-illustrated *if-else* statement could be replaced by a sequence of if-if else-else statements or a switch statement in which alternatives are selected by the *coin* value.

In other words, if the actual operation is an operation O and the dummy operation O', the operation O is replaced with:

if (coin == 0)

    T0 = O       */* actual operation

    T1 = O'     */* dummy operation

else

$$T1 = O' \qquad \text{/* dummy operation}$$

$$T0 = O \qquad \text{/* actual operation}$$

endif

### Table 5: Code Replacing an Operation O

In the above illustrated embodiment, the result of the actual operation is saved into a temporary variable, *T0*. Therefore, that temporary variable should be assigned to a variable for use in the next iteration of the loop, step 509:

$$T = T0$$

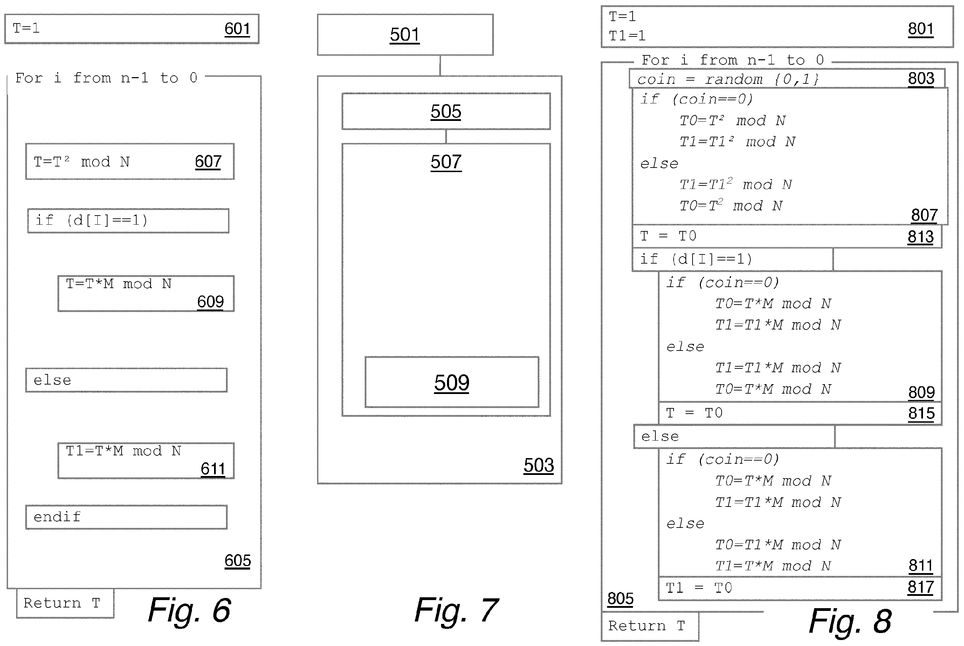

FIG. 6-8 illustrate this transformation for the square-and-multiply algorithm.

FIG. 6 is a prior art square-and-multiply algorithm, FIG. 7 is a skeletal replication of the transformation mechanism of FIG. 5, and FIG. 8 is the corresponding protected square-and-multiply algorithm.

The first step, step 501, deals with initialization of intermediate values. In the source square-and-multiply-always algorithm of FIG. 6, the intermediate variable *T* is initialized to 1, as seen in the initialization block 601. Accordingly, a dummy variable, *T1*, is similarly initialized to 1 in the corresponding initialization block 801 of the protected algorithm. For an algorithm where the actual intermediate variable, *T,* is initialized to, for example, the message *M, T1* could be initialized to a random value to make it more difficult to distinguish between operations using a register storing *T* from a register storing *T1*.

An instruction 803 generating a random value is inserted into the code, step 505.

In an alternative embodiment (not shown here; however, illustrated in Table 9: square-and-multiply-always with randomized operation sequences), registers holding dummy variables, e.g., T0 and T1, are randomized for each iteration of the loop 805.

Step 507: Replace all actual operations with switch statements and sequences of actual operations and dummy operations that have different execution orders depending on the value of the random from the instruction 803.

The square-and-multiply-always algorithm consist of three operations, the squaring (S) 607, the actual multiplication (M) 609, and the dummy multiplication (M') 611. It should be noted that the dummy multiplication (M') 611 is part of the classic square-and-multiply always algorithm and should not be confused with the dummy operations that are inserted in the random operation sequence versions according to the present technology.

The first of these, squaring (S) 607, is replaced with code section 807 having a switch based on the value of the random and sequences that include a dummy squaring as shown in Table 6:

if (coin == 0)

$$T0 = T^2 \bmod N \qquad \text{/* actual squaring operation}$$

$$T1 = T1^2 \bmod N \qquad \text{/* dummy squaring operation}$$

else

$$T1 = T1^2 \bmod N \qquad \text{/* dummy squaring operation}$$

$$T0 = T^2 \bmod N \qquad \text{/* actual squaring operation}$$

endif

### Table 6: Code Replacing Actual Squaring Operation

Similarly the multiplication operation 609 is replaced with a code section 809 having a switch statement with path selection based on the value of the random and sequences that include a dummy multiplication as shown in Table 7:

```
if (coin == 0)
        T0 = T*M mod N     /* actual squaring operation
        T1 = T1*M mod N   /* dummy squaring operation
else
        T1 = T1*M mod N   /* dummy squaring operation
        T0 = T*M mod N           /* actual squaring operation
endif
```

Table 7: Code Replacing Actual Multiplication Operation

Finally, the dummy multiplication operation 611 is replaced with a code section 811 having a switch with path selection based on the value of the random and sequences that include a dummy multiplication as shown in Table 8:

```
if (coin == 0)
        T0 = T*M mod N     /* actual squaring operation
        T1 = T1*M mod N   /* dummy squaring operation
else
        T1 = T1*M mod N   /* dummy squaring operation
        T0 = T*M mod N           /* actual squaring operation
endif
```

Table 8: Code Replacing Actual Multiplication Operation

In some algorithms, for example, the Montgomery Ladder, the value of the bit, $d[i]$, of the secret, $d$, being processed may trigger more than one operation. For example,

```
if(d[i]==1)
        R0 = R0*R1 mod N
        R1 = R1²
else
        R1 = R1*R0 mod N
        R0 = R0²
endif
```

$$if(d[i]==1)$$
$$R_0 = R_0 * R_1 \bmod N$$
$$R_1 = R_1^2$$
$$else$$
$$R_1 = R_1 * R_0 \bmod N$$
$$R_0 = R_0^2$$
$$endif$$

In such a case, each of the operations are replaced with an actual operation and a dummy operation within the sequence associated with a value of the random, *coin,* for example as:

```
if(d[i]==1)
        if(coin==0)
                A0= R0*R1 mod N      /* Actual operation
                A1= R1*R0 mod N      /* Dummy operation
                B0= R1² mod N        /* Actual operation
                B1= R0² mod N        /* Dummy operation
        else
                A1= R1*R0 mod N      /* Dummy operation
                A0= R0*R1 mod N      /* Actual operation
                B1= R0² mod N        /* Dummy operation

                B0= R1² mod N         /* Actual operation
        endif
    endif
```

Assignment statements to carry temporary values forward are inserted, step 509, resulting in instructions 813, 815, and 817 being inserted into the code. It should be noted that since the multiplication 811 when $d[i]=0$ is a dummy operation in of itself, the assignment 817 is to a value that is only used in subsequent dummy operations.

Table 9 provides a complete code listing of the square-and-multiply-always with randomized sequences of actual and dummy operations:

```
d={0,1}^n
T=1
T_1=1
For i from n-1 to 0
        coin=random{0,1}
        randomize(T_0,T_1)
        if(coin==0)
                T_0= T^2 mod N        /* S
                T_1= T_1^2 mod N       /* S'
        else
                T_1= T_1^2 mod N       /* S'
                T_0= T^2 mod N        /* S
        endif
        T=T_0

        if(d[i]==1)
                if(coin==0)
                        T_0= T*M mod N      /* M
                        T_1= T_1*M mod N     /* M'
                else
                        T_1= T_1*M mod N     /* M'
                        T_0= T*M mod N      /* M
                endif
                T=T_0
        else
                if(coin==0)
                        T_0= T*M mod N      /* M
                        T_1= T_1*M mod N     /* M'
                else
                        T_1= T_1*M mod N     /* M'

                        T_0= T*M mod N      /* M
                endif
                T_0=T_1
        endif
endfor
return T
```

Table 9: Square-and-Multiply-Always with Randomized Actual and Dummy

Operations

The execution trace depends on the value of the variable *coin,* which changes for each iteration. For example, for coin=[1,0,0,1,0,1], the trace of $51_{10}=110011_2$ would be: S'SM'M SS'MM' SS'MM' S'SM'M SS'MM' S'SM'M where $M=T*M$, $M'= T_1*M$, $S=T^2$, $S'=T_1^2$. The pattern SS'MM' occurs for both (*d[i]*, *coin*) = (0,1) and (*d[i]*, *coin*) = (1,1). Thus, the pattern, being the same for opposite values of *d[i]*, reveals nothing about the value of *d[i]*.

Table 10 is a listing of the Montgomery Ladder algorithm with the mechanism of randomizing the execution order of actual and dummy operations applied:

```
d={0,1}ⁿ
R₀=1
R₁=M
For i from n-1 to 0
        coin=random{0,1}
        randomize(A₀,A₁,B₀,B₁)
        if(d[i]==1)
                if(coin==0)
                        A₀= R₀*R₁ mod N          /* M
                        A₁= R₁*R₀ mod N          /* M'
                        B₀= R₁² mod N            /* S
                        B₁= R₀² mod N            /* S'
                else
                        A₁= R₁*R₀ mod N          /* M'
                        A₀= R₀*R₁ mod N          /* M
                        B₁= R₀² mod N            /* S'
                        B₀= R₁² mod N            /* S
                endif
                R₀=A₀
                R₁=B₀
        else
                if(coin==0)
                        A₀= R₁*R₀ mod N          /* M'
                        A₁= R₀*R₁ mod N          /* M

                        B₀= R₀² mod N            /* S'
                        B₁= R₁² mod N            /* S
                else
                        A₁= R₀*R₁ mod N          /* M
                        A₀= R₁*R₀ mod N          /* M'
                        B₁= R₁² mod N            /* S
                        B₀= R₀² mod N            /* S'
                endif
                R₁=A₀
                R₀=B₀
        endif
endfor
return R₀
```

Table 10: Montgomery Ladder with Randomized Actual and Dummy Operations

Again, a trace from executing this version of the Montgomery Ladder depends on the value of the *coin* and is independent of the value of the secret *d*. For *coin* = [1,0,0,1,0,1] the randomized Montgomery Ladder produces the trace: M'MS'S MM'SS' M'MS'S MM'SS' MM'SS' M'MS'S
where $M=R_0*R_1$, $M'=R_1*R_0$, $S=R_1^2$, $S'=R_0^2$

As an example, the pattern MM'SS' occurs for both (*d,coin*) = (1,0) and (*d,coin*) = (0,1), i.e., for opposing values of *d*[*i*] and coin, respectively. Thus, even if the attacker can distinguish between M and M', on the one hand, and S and S', on the other, the attacker would not be able to know which combination of *d*[*i*] value and coin produced the sequence, and the execution trace does not reveal the value of *d*.

It should be noted that the designation M' or S' in the modified Montgomery Ladder algorithm does not designate that the operation is a dummy operation. Rather, in the alternative sequences, if the actual operation is M, the dummy is M' and vice versa.

A consequence of the use of the random value (coin), when either the routine of Table 9 (randomized square-and-multiply-always) or Table 10 (randomized Montgomery Ladder) is executed, even if an attacker can detect and differentiate between squaring and multiplication operations from side-channel information, such as power consumption traces, because the execution order of actual and dummy operations has been randomized, it is not possible for the attacker to determine the value of the secret $d$.

The randomized exponentiation mechanism described herein is not without cost. The number of calculations is 4 times the length of the secret; conversely, for the square and multiply algorithm without any protection the number of calculations is 1.5 times the number of bits of the secret. There is also the need to store two additional variables that are the length of the secret.

For added security, the herein-discussed techniques may be combined with other countermeasures such as masking and timing manipulation.

While the technology of randomizing operations of cryptographic primitives is described herein with respect to the square-and-multiply-always and Montgomery Ladder algorithms for modular exponentiation, the techniques are applicable to other algorithms as well, for example, but not limited to RSA and Elliptic Curve Cryptography (ECC).

The main cryptographic function to protect in RSA is the modular exponentiation. Thus, the herein-described techniques are directly applicable to protecting RSA.

Conversely, in ECC the main cryptographic function to protect is scalar multiplication $k*P$ where $k$ is the secret to protect. The ECC scalar multiplication consists of chaining doubling operations. The code of Table 11 illustrates an ECC scalar multiplication function kP:

```
kP (P,k)
        T = P
        for i from n-1 to 0
                T= 2*P
                If (k[i] == 1)
                        T = T+P
                endif
        endfor
        return T
        Table 11: Prior Art ECC scalar multiplication
```

The ECC scalar multiplication maybe modified as described herein into the code illustrated in Table 12:

```
kP (P,k,#E(Fp))
    T = P
    for i from n-1 to 0
            coin = random{0,1}
            randomize(T₀,T₁)
            if (coin==0)
                    T₀= 2*P                /* M
                    T₁= 2*T₁               /* M'
            else
                    T₁= 2*T₁               /* M'
                    T₀= 2*P                /* M
            endif
            T= T₀
            If (k[i] == 1)
                    if (coin==0)
                            T₀= T+P                /* A
                            T₁= T₁+P               /* A'
                    else
                            T₁= T₁+P               /* A'
                            T₀= T+P                /* A
                    endif
                    T = T₀
            endif
    endfor
    return T
```

Table 12: ECC scalar multiplication with Randomized Actual and Dummy

Operations

In an alternative embodiment the randomization is applied over a sliding window of bits of d[i], e.g., for two (2-ary) or four (4-ary) bits. The random value could then be made to have more than two values to allow for a larger combination of randomized sequences of actual and dummy operations.

Table 13 provides an example code for a sliding-window implementation for square-and-multiply exponentiation without protection using the randomizations described herein:

```
d={0,1}ⁿ
R₀=1
For i from n-1 to 0 by step 2:
        R₀ = R₀²
        R₀ = R₀²
        if (d[i:i-1]==01)
                R₀ = R₀*M mod N
        if (d[i:i-1]==10)
```

$$R_0 = R_0 * M^2 \bmod N$$
$$\text{if } (d[i: i-1]==11)$$
$$R_0 = R_0 * M^3 \bmod N$$
endif
endfor
Return $R_0$

Table 13: 2-ary sliding window implementation of square-and-multiply

exponentiation

As with the other algorithms, the exponent $d$ is a binary number having $n$ binary digits. However, unlike the other algorithms, $d$ is traversed through the For loop two bits at a time. Thus, there are four possible values for the 2-bit window on d, namely, 00, 01, 10, and 11. For 00, no multiplication by M is performed, for 01, 10, and 11, multiplication is by M, $M^2$, and $M^3$, respectively.

Appendix A, provides an example code for 2-ary sliding window implementation of square-and-multiply exponentiation with randomized execution order; it is described here using margin line numbers for reference.

A random coin taking one of four values is drawn for each computation block (lines 9 and 47), i.e., for the square computations (lines 10-46) and the multiplication operations, lines 48-136. These coin values are used to select between four different code sections that mix dummy and actual calculations in different orders and thereby protect the calculations from horizontal side channel detection as described herein.

In an alternative embodiment, several coins drawing could be used to strengthened further the implementation to avoid further attacks (not known yet) that could take advantage of the same coin drawing within a loop of the ladder. For example, a drawing of the coin value may be introduced in the beginning of the sequence of operations for each case of the if-else that depends on the value of a bit, *d[i]*, of the secret, *d*. For example,

```
if(d[i]==1)
          if(coin==0)
                    T0= T*M mod N        /* M
                    T1= T1*M mod N       /* M'
          else
                    T1= T1*M mod N       /* M'
                    T0= T*M mod N        /* M
          endif
          T=T0
else
          if(coin==0)
                    T0= T*M mod N        /* M
                    T1= T1*M mod N       /* M'
          else
                    T1= T1*M mod N       /* M'
                    T0= T*M mod N        /* M
          endif
          T0=T1
endif
```

of the randomized square-and-multiply-always algorithm may be modified into

```
if(d[i]==1)
        coin=random {0,1}
        if(coin==0)
                T0= T*M mod N        /* M
                T1= T1*M mod N       /* M'
        else
                T1= T1*M mod N       /* M'
                T0= T*M mod N        /* M
        endif
        T=T0
else
        coin=random {0,1}
        if(coin==0)
                T0= T*M mod N        /* M
                T1= T1*M mod N       /* M'
        else
                T1= T1*M mod N       /* M'
                T0= T*M mod N        /* M
        endif
        T0=T1
endif
```

From the foregoing it will be apparent that an efficient and secure mechanism for improving security of cryptographic calculations performed on a digital security device is provided. For example, modular exponentiation and scalar multiplication using a secret protected by a digital security device is protected from attacks based on being able to differentiate between different arithmetic operations, such as squaring and multiplication due to horizontal side channel attack. Thus, the security of offered by the security device against inadvertent divulgation of secrets is improved.

Although specific embodiments of the invention have been described and illustrated, the invention is not to be limited to the specific forms or arrangements of parts so described and illustrated. The invention is limited only by the claims.

**APPENDIX A:**

**Sliding-window implementation of square-and-multiply with randomized execution order.**

```
d={0,1}^n
R_0=1
R_1=M
R_2=M^2
R_3=M^3
T=1
randomize(A_0,A_1,A_2,A_3)
For i from n-1 to 0 by step 2:
    coin=random{0,1,2,3}
    if (coin==0)
        A_0= T*T mod N
        A_0= A_0*A_0 mod N
        A_1= A_1*A_1 mod N
        A_1= A_1*A_1 mod N
        A_2= A_2*A_2 mod N
        A_2= A_2*A_2 mod N
        A_3= A_3*A_3 mod N
        A_3= A_3*A_3 mod N
    else if (coin==1)
        A_1= A_1*A_1 mod N
        A_1= A_1*A_1 mod N
        A_2= A_2*A_2 mod N
        A_2= A_2*A_2 mod N
        A_3= A_3*A_3 mod N
        A_3= A_3*A_3 mod N
        A_0= T*T mod N
        A_0= A_0*A_0 mod N
    else if (coin==2)
        A_2= A_2*A_2 mod N
        A_2= A_2*A_2 mod N
        A_3= A_3*A_3 mod N
        A_3= A_3*A_3 mod N
        A_0= T*T mod N
        A_0= A_0*A_0 mod N
        A_1= A_1*A_1 mod N
        A_1= A_1*A_1 mod N
    else if (coin==3)
        A_3= A_3*A_3 mod N
        A_3= A_3*A_3 mod N
        A_0= T*T mod N
```

```
A0= A0*A0 mod N
A1= A1*A1 mod N
A1= A1*A1 mod N
A2= A2*A2 mod N
A2= A2*A2 mod N
endif
coin=random{0,1,2,3}
if (d[i:i-1]==00)
    if(coin==0)
        T= A0*R0 mod N
        A1= A0*R1 mod N
        A2= A0*R2 mod N
        A3= A0*R3 mod N
    else if(coin==1)
        A1= A0*R1 mod N
        A2= A0*R2 mod N
        A3= A0*R3 mod N
        T= A0*R0 mod N
    else if(coin==2)
        A2= A0*R2 mod N
        A3= A0*R3 mod N
        T= A0*R0 mod N
        A1= A0*R1 mod N
    else if(coin==3)
        A3= A0*R3 mod N
        T= A0*R0 mod N
        A1= A0*R1 mod N
        A2= A0*R2 mod N
    endif
if (d[i:i-1]==01)
    if(coin==0)
        A0= A0*R0 mod N
        T= A0*R1 mod N
        A2= A0*R2 mod N
        A3= A0*R3 mod N
    else if(coin==1)
        T= A0*R1 mod N
        A2= A0*R2 mod N
        A3= A0*R3 mod N
        A0= A0*R0 mod N
    else if(coin==2)
        A2= A0*R2 mod N
        A3= A0*R3 mod N
        A0= A0*R0 mod N
        T= A0*R1 mod N
```

```
86          else if(coin==3)
87              A3= A0*R3 mod N
88              A0= A0*R0 mod N
89              T= A0*R1 mod N
90              A2= A0*R2 mod N
91          endif
92      else if (d[i:i-1]==10)
93          if(coin==0)
94              A0= A0*R0 mod N
95              A1= A0*R1 mod N
96              T= A0*R2 mod N
97              A3= A0*R3 mod N
98          else if(coin==1)
99              A1= A0*R1 mod N
100             T= A0*R2 mod N
101             A3= A0*R3 mod N
102             A0= A0*R0 mod N
103         else if(coin==2)
104             T= A0*R2 mod N
105             A3= A0*R3 mod N
106             A0= A0*R0 mod N
107             A1= A0*R1 mod N
108         else if(coin==3)
109             A3= A0*R3 mod N
110             A0= A0*R0 mod N
111             A1= A0*R1 mod N
112             T= A0*R2 mod N
113         endif
114     if (d[i:i-1]==11)
115         if(coin==0)
116             A0= A0*R0 mod N
117             A1= A0*R1 mod N
118             A2= A0*R2 mod N
119             T= A0*R3 mod N
120         else if(coin==1)
121             A1= A0*R1 mod N
122             A2= A0*R2 mod N
123             T= A0*R3 mod N
124             A0= A0*R0 mod N
125         else if(coin==2)
126             A2= A0*R2 mod N
127             T= A0*R3 mod N
128             A0= A0*R0 mod N
129             A1= A0*R1 mod N
130         else if(coin==3)
```

$$T = A_0 * R_3 \bmod N$$
$$A_0 = A_0 * R_0 \bmod N$$
$$A_1 = A_0 * R_1 \bmod N$$
$$A_2 = A_0 * R_2 \bmod N$$
endif
endif
endfor
Return T

**Claims**

1. A method for enhancing security of a computerized digital security device against horizontal side-channel analysis attacks, the method comprising:

in executing, by a processor of the computerized digital security device, a cryptographic algorithm involving a sequence of a first operation ($S$, $M$) and a second operation ($M$, $M'$), the sequence depending on coefficients of a protected secret ($d$) protected by the digital security device, based on a random value (coin), performing a first sequence containing an actual intermediate-value calculation (S,M) of an intermediate value ($T_0, A_0, B_0$) followed by a dummy intermediate-value calculation (S',M',M) of a dummy value ($T_1, A_1, B_1$) or a second sequence containing by the dummy intermediate-value calculation of the dummy value ($T_1, A_1, B_1$) followed the true intermediate-value calculation of the intermediate value ($T_0, A_0, B_0$) whereby an execution sequence of true intermediate-value calculations and dummy intermediate-value calculations is randomized by the random value (coin).

2. The method for enhancing security of a computerized digital security device against horizontal side-channel analysis attacks of claim 1, the method comprising:

receiving, by the processor of the computerized digital security device, a quantity ($X$), executing the cryptographic algorithm on the received quantity ($X$) and the protected secret ($d$), wherein the sequence of executions of first operation ($S$) and second operation ($M$) are performed by the cryptographic algorithm as a mechanism for evaluating a cryptographic function on the received quantity ($X$) and the protected secret ($d$), having $n$ coefficients ($d_i$), to determine a result ($T$);

iteratively executing a loop that for each iteration of the loop, indexed by a loop index ($i$), over the coefficients ($d_i$) of the protected secret ($d$), in which at least one of the first (S) or second (M) operation is performed, operating a body of the loop on a coefficient of the protected secret indexed by the loop index, the body of the loop comprising:

determining the random value (coin);
depending on the coefficient indexed by the loop index, executing a code segment corresponding to the first operation ($S$) or the second operation ($M$) wherein for a first value of the random value (coin):
executing the first code section (S,M) including the sequence of intermediate-value calculations containing the true intermediate-value calculation ($S$, $M$) producing a true intermediate-value ($T_0$) followed by a dummy intermediate-value calculation (S',M') producing a dummy intermediate-value ($T_1$); and
wherein for a second value of the random value (coin):
executing the second code section (S,M) including a sequence of operations containing the dummy intermediate-value calculation (S',M') producing the dummy intermediate value ($T_1$) followed by the true intermediate-value calculation (S,M) producing the true intermediate value ($T_0$);
saving the true intermediate-value ($T_0$) into a loop iteration result ($T$) for the next iteration of the loop; and
upon completing the iteration of the loop, returning the loop iteration result as a final result for the cryptographic function.

3. The method for enhancing security of a computerized digital security device against horizontal side-channel analysis attacks of claim 2, wherein for a first value of a coefficient ($d_i$), executing both the code segment corresponding to the first operation ($S$) and the second operation ($M$).

4. The method for enhancing security of a computerized digital security device against horizontal side-channel analysis attacks of claim 3 wherein the random value is re-determined before performing the second operation.

5. The method for enhancing security of a computerized digital security device against horizontal side-channel analysis attacks of claim 1, wherein the cryptographic algorithm is a square-and-multiply-always algorithm for exponentiation ($X^d$) of a base by a an exponent, wherein the base is a received quantity ($X$) and the exponent is the protected secret ($d$).

6. The method for enhancing security of a computerized digital security device against horizontal side-channel analysis attacks of claim 1, wherein the cryptographic algorithm is a Montgomery ladder algorithm for exponentiation ($X^d$) of a base by a an exponent, wherein the base is a received quantity ($X$) and the exponent is the protected secret ($d$).

7. The method for enhancing security of a computerized digital security device against horizontal side-channel analysis attacks of claim 1, wherein the cryptographic algorithm performs a scalar product of an elliptic curve cryptography system.

8. The method for enhancing security of a computerized digital security device against horizontal side-channel analysis attacks of claim 1, wherein the cryptographic algorithm performs a modular exponentiation of an RSA cryptography system.

9. The method for enhancing security of a computerized digital security device against horizontal side-channel analysis attacks of claim 1, wherein the digital security device is a smart card.

10. The method for enhancing security of a computerized digital security device against horizontal side-channel analysis attacks of claim 1, wherein the sequences of a first operation and second operation correspond to processing one coefficient of the protected secret.

11. The method for enhancing security of a computerized digital security device against horizontal side-channel analysis attacks of claim 1, wherein the sequences of a first operation and second operation correspond to processing a window of coefficients comprising a plurality of coefficients of the protected secret.

12. A digital security device having improved protection against horizontal side-channel attacks, comprising:

   a processor; and
   a memory connected to the processor, the memory including instructions executable by the processor for performing the method of any of claims 1 to 11.

13. A non-transitory memory comprising instructions to cause a processor of a digital security device to perform the method for enhancing security of a computerized digital security device against horizontal side-channel analysis attacks of any of claims 1 to 11.

Fig. 1

*Fig. 2*

# Digital Security Device

## Processor
301

## RAM
### Sensitive Information315
302

## NVM

### Program Memory

#### Operating System
309

#### Application with Sensitive Operation
311

305

### Data Memory

#### Sensitive Information
313

307

303

103

*Fig. 3*

## Fig. 4
## (Prior Art )

Store protected secret,
$d = \{0,1\}^n$    401

Initialize intermediate value, T    403

Iterate with loop index, $i$,
*From highest order bit to lowest order bit*

First operation, square (**S**)

True (S) calc:
$T = T^2 \bmod N$    <u>407</u>

Second operation,
conditional multiply (**M**)

If $d_i == 1$

411

yes

no

True (M) calc:
$T = T*M \bmod N$    <u>413</u>

<u>409</u>

<u>405</u>

Return (T)    415

For any value initializations, insert "dummy" initializations using a value equivalent to "actual" initialization. 501

In an iteration over bits $d_i$ of d:

Insert calculation of a random, e.g.:
coin = random {0,1}                          505

Insert statements to randomize temporary variables, e.g.:

Randomize(A0, A1, B0, B1);
                                              506

For each operation O (e.g., O in {S,M, ...})
Replace O with a switch statement, inserting dummy operations D and mixing up the sequence of actual O and dummy operations D depending on value of the random, e.g.:

If (coin ==0)
        T0 = O   /* actual operation
        T1 = O'  /* dummy operation
Else [coin==1]
        T1 = O' /* dummy operation
        T0 = O   /* actual operation
Endif

Save result of actual operation for subsequent iteration or result, e.g.:

T=T0                                          509

                                              507

                                              503

*Fig. 5*

**Fig. 6**

```
T=1                              601

┌─ For i from n-1 to 0 ─────────────
│
│   T=T² mod N            607
│
│   if (d[I]==1)
│
│       T=T*M mod N
│                        609
│
│   else
│
│       T1=T*M mod N
│                        611
│
│   endif
│                              605
└──────────────────────────────────
Return T
```

**Fig. 7**

```
        501

┌──────────────────────┐
│                      │
│  ┌────────────────┐  │
│  │      505       │  │
│  ├────────────────┤  │
│  │      507       │  │
│  │                │  │
│  │                │  │
│  │  ┌──────────┐  │  │
│  │  │   509    │  │  │
│  │  └──────────┘  │  │
│  └────────────────┘  │
│                  503 │
└──────────────────────┘
```

**Fig. 8**

```
T=1
T1=1                              801

┌─ For i from n-1 to 0 ──────────────────
│  coin = random {0,1}            803
│  if (coin==0)
│      T0=T² mod N
│      T1=T1² mod N
│  else
│      T1=T1² mod N
│      T0=T² mod N
│                                 807
│  T = T0                         813
│  if (d[I]==1)
│      if (coin==0)
│          T0=T*M mod N
│          T1=T1*M mod N
│      else
│          T1=T1*M mod N
│          T0=T*M mod N
│                                 809
│      T = T0                     815
│  else
│      if (coin==0)
│          T0=T*M mod N
│          T1=T1*M mod N
│      else
│          T0=T1*M mod N
│          T1=T*M mod N
│                                 811
│      T1 = T0                    817
│  805
└─────────────────────────────────────────
Return T
```

Europäisches
Patentamt

European
Patent Office

Office européen
des brevets

# EUROPEAN SEARCH REPORT

Application Number

EP 22 30 6680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 546 737 A1 (ST MICROELECTRONICS ROUSSET [FR]) 16 January 2013 (2013-01-16) * paragraph [0036] – paragraph [0057] * * paragraphs [0002], [002A], [0003], [003A] * | 1-13 | INV. G06F7/72 H04L9/00 |
| A | EP 2 974 094 A1 (CRYPTOGRAPHY RES INC [US]) 20 January 2016 (2016-01-20) * paragraph [0090] – paragraph [0178]; figures 6A-6C * | 1-13 | |
| A | EP 3 435 585 A1 (ST MICROELECTRONICS ROUSSET [FR]) 30 January 2019 (2019-01-30) * paragraph [0002] – paragraph [0074] * * figures 2-3 * | 1-13 | |
| A | EP 3 287 891 A1 (STMICROELECTRONICS ROUSSET [FR]) 28 February 2018 (2018-02-28) * paragraph [0019] – paragraph [0063] * * figure 2 * | 1-13 | TECHNICAL FIELDS SEARCHED (IPC) |
| A | CHRISTOPHE CLAVIER ET AL: "Horizontal Correlation Analysis on Exponentiation", IACR, INTERNATIONAL ASSOCIATION FOR CRYPTOLOGIC RESEARCH, vol. 20101129:141334, 29 November 2010 (2010-11-29), pages 1-19, XP061004345, [retrieved on 2010-11-29] * paragraph [0002] – paragraph [0006] * | 1-13 | G06F H04L |

The present search report has been drawn up for all claims

| Place of search | Date of completion of the search | Examiner |
|---|---|---|
| Munich | 26 April 2023 | Bec, Thierry |

EPO FORM 1503 03.82 (P04C01)

## ANNEX TO THE EUROPEAN SEARCH REPORT
## ON EUROPEAN PATENT APPLICATION NO.

EP 22 30 6680

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2023

| Patent document cited in search report | | Publication date | Patent family member(s) | | Publication date |
|---|---|---|---|---|---|
| EP 2546737 | A1 | 16-01-2013 | EP | 2546737 A1 | 16-01-2013 |
| | | | FR | 2977953 A1 | 18-01-2013 |
| | | | US | 2013016826 A1 | 17-01-2013 |
| EP 2974094 | A1 | 20-01-2016 | EP | 2974094 A1 | 20-01-2016 |
| | | | JP | 6707024 B2 | 10-06-2020 |
| | | | JP | 2016510914 A | 11-04-2016 |
| | | | TW | 201437910 A | 01-10-2014 |
| | | | US | 2014281573 A1 | 18-09-2014 |
| | | | US | 2018211065 A1 | 26-07-2018 |
| | | | US | 2020110907 A1 | 09-04-2020 |
| | | | WO | 2014149251 A1 | 25-09-2014 |
| EP 3435585 | A1 | 30-01-2019 | CN | 109299621 A | 01-02-2019 |
| | | | EP | 3435585 A1 | 30-01-2019 |
| | | | FR | 3069671 A1 | 01-02-2019 |
| | | | US | 2019034629 A1 | 31-01-2019 |
| EP 3287891 | A1 | 28-02-2018 | EP | 3287891 A1 | 28-02-2018 |
| | | | FR | 3055436 A1 | 02-03-2018 |
| | | | US | 2018060566 A1 | 01-03-2018 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MARK RANDOLPH ; WILLIAM DIEHL.** Power Side-Channel Attack Analysis: A Review of 20 Years of Study for the Layman. *Cryptography,* 2020, vol. 4, 15
- **ERIC BRIER ; CHRISTOPHE CLAVIER ; FRANCIS OLIVIER.** Correlation Power Analysis with a Leakage Model. *CHES,* 2004, 16-29
- Sliding Windows Succumbs to Big Mac Attack. **C. D. WALTER.** Cryptographic Hardware and Embedded Systems - CHES 2001. vol. 2162
- Lecture Notes in Computer Science. Springer, 2001, 286-299
- **MARC F. WITTEMAN ; JASPER G. J. VAN WOUDENBERG ; FEDERICO MENARINI.** Defeating RSA Multiply-Always and Message Blinding Countermeasures. *CT-RSA,* 2011, 77-88
- **CHRISTOPHE CLAVIER ; BENOIT FEIX ; GEORGES GAGNEROT ; MYLENE ROUSSELLET ; VINCENT VERNEUIL.** Horizontal Correlation Analysis on Exponentiation. *ICICS,* 2010, 46-61
- Horizontal and Vertical Side-Channel Attacks against Secure RSA Implementations. **AURELIE BAUER ; ELIANE JAULMES ; EMMANUEL PROUFF ; JUSTINE WILD.** Topics in Cryptology- CT-RSA 2013 - The Cryptographers' Track at the RSA Conference 2013, San Francisco, CA, USA. 25 February 2013, vol. 7779
- Lecture Notes in Computer Science. Springer, 2013, 1-17
- The montgomery powering ladder. **MARC JOYE ; SUNG-MING YEN.** Cryptographic Hardware and Embedded Systems - CHES 2002, 4th International Workshop, Redwood Shores, CA, USA. 13 August 2002, vol. 2523
- Lecture Notes in Computer Science. Springer, 2002, 291-302